# EUROPEAN PATENT SPECIFICATION

(11) **EP 3 722 669 B1**
(45) Date of publication and mention of the grant of the patent: **27.03.2024**
(21) Application number: 17933925.4
(22) Date of filing: 15.12.2017
(51) Int. Cl.: F23J 15/06, F24H 8/00, F28D 19/04, F23L 7/00, F24H 9/00

(54) **DEEP RECOVERY SYSTEM FOR RESIDUAL HEAT OF FUME**
TIEFES RÜCKGEWINNUNGSSYSTEM FÜR RESTHITZE VON RAUCHGASEN
SYSTÈME DE RÉCUPÉRATION EN PROFONDEUR DE CHALEUR RÉSIDUELLE DE VAPEUR

(30) Priority: 04.12.2017 CN 201711260072
(43) Date of publication of application: 14.10.2020
(73) Proprietor: Tsinghua University, Beijing 100084 (CN)
(72) Inventor: JIANG, Yi, Beijing 10084 (CN); LIU, Xiao hua, Beijing 10084 (CN); XU, Xi, Beijing 10084 (CN); ZHANG, Shi gang, Beijing 10084 (CN)
(74) Representative: ABG Intellectual Property Law, S.L.
(86) International application number: PCT/CN2017/116395
(87) International publication number: WO 2019/109375

(56) References cited:
- CN-A- 104 654 480
- CN-A- 107 036 113
- CN-A- 107 238 097
- CN-U- 202 237 766
- JP-A- S6 297 627
- JP-A- S57 187 592
- US-A- 4 252 181
- US-A- 5 482 108
- US-A1- 2009 241 814

## Description

### TECHNICAL FIELD

The present invention belongs to the technical fields of Heating Ventilation Air conditioning and urban heat supply, and particularly relates to a further recovery system for waste heat of flue gas.

### BACKGROUND

The demand for natural gas as a clean and efficient primary energy source in China continues growing. In 2016, the natural gas consumption in the whole China has reached 205.8 billion cubic meters, with a year-on-year increase of 6.6%. Meanwhile, thanks to the implementation of the "coal to gas" policy in the North China, natural gas has become the main source of energy for winter heating in the North China. At present, the heating equipment in winter is mainly gas boilers, wherein the exhaust fume temperature of flue gas is generally 80-120 °C, and there is huge potential for waste heat recovery. In addition, the thermal efficiency of the boiler gradually increases as the exhaust temperature of flue gas drops. When the exhaust temperature of flue gas decreases to 30-55 °C, the latent heat is recovered, and the thermal efficiency increases more quickly, which can reduce the consumption of natural gas.

However, the dew point temperature of flue gas is close to the temperature of boiler backwater in the widely used heat recovery system, the backwater cannot effectively recover the latent heat in the flue gas, and a large part of energy in the exhaust flue gas is still wasted. In the existing further recovery systems for residual heat, the use of an air preheater or an economizer has the problems of insufficient latent heat recovery or mismatch between the phase transitions of flue gas and air. In addition, some scholars have pointed that the main problem with using water as a medium for heat exchange between flue gas and air is the mismatch of energy conversion caused by the nonlinearity of the saturation line of air.

US 5482108A discloses a method for operating a heat exchanger to achieve optimal energy exchange for heat exchange in a regenerative heat exchange unit between combustion air and precooled wet flue gases.

US 4252181A discloses a heat-recovering fan comprising a rotating capillary impeller with a separating plate inside to separate the air currents and being in communication with separate supply air and exhaust air outlets.

### SUMMARY

In view of the above problems, it is an object of the present invention to provide a further recovery system for residual heat of flue gas. By increasing the humidity ratio and temperature of the inlet air of a gas boiler, the dew point temperature of the outlet flue gas is correspondingly increased, so that more latent heat can be recovered by the boiler backwater; at the same time, the flue gas is cooled and dehumidified to reduce the exhaust flue gas temperature and greatly improve the thermal efficiency of the boiler.

In order to achieve the above object, the present invention adopts the following technical solution: a further recovery system for residual heat of flue gas, characterized in that the recovery system comprises: a housing which is an upright thin-wall hollow cylinder, a rotating core coaxially installed in the upper part of the housing and capable of rotating around its central axis, a partition plate installed in the housing and passing through the central axis of the housing and the rotating core, a baffle plate, a spray device, and a water-water heat exchanger with a heat release unit connected to the water inlet and the water outlet of the spray device. The rotating core is a upright thick-wall hollow cylinder, and the longitudinal cross section of the side wall of the rotating core is honeycomb-like, the interiors of which are coated with desiccant material(s). The partition plate divides the internal space of the housing and the rotating core into an air flow channel and a flue gas flow channel. Baffle plates are respectively installed between the top of the housing and the top of the rotating core, between the top of the rotating core and the top of the partition plate on the flue-gas-flow-channel side, between the bottom of the rotating core and the partition plate on the air-flow-channel side, and between the bottom of the rotating core and the housing on the flue-gas-flow-channel side. The top of the rotating core on the air-flow-channel side forms an air flow channel inlet, and an air flow channel outlet is provided in the lower wall on the air-flow-channel side. A flue gas flow channel inlet and a flue gas flow channel outlet are respectively provided in the lower wall and upper wall on the flue-gas-flow-channel side. The spray device is installed in the flue gas flow channel in the lower part of the housing.

Liquid distributor(s) of the spray device is/are disposed near the side wall of the housing and the partition plate.

The liquid distributor(s) of the spray device is/are disposed above the flue gas flow channel inlet.

The partition plate in the lower part of the housing further has an air-flue gas heat exchanger fixed thereon. The heat release unit of the air-flue gas heat exchanger is positioned in the air flow channel and the heat absorption unit thereof is positioned in the flue gas flow channel.

The partition plate in the lower part of the housing further has an air-flue gas heat exchanger fixed thereon. The heat release unit of the air-flue gas heat exchanger is positioned in the air flow channel and the heat absorption unit thereof is positioned in the flue gas flow channel. The air-flue gas heat exchanger is disposed below the liquid distributor(s) of the spray device.

With above technical solutions, the present invention provides following advantages: 1. the further recovery system for residual heat of flue gas according to the present invention is installed with a rotating core coated with desiccant material(s), which rotates between the flue gas and the air at a certain speed, wherein the rotating core coated with the desiccant material(s) can be used as a medium to absorb the heat and moisture in the flue gas on the flue gas side and then heat and moisturize the air after turning to the air side, so as to achieve the heat and moisture exchange between the air and the flue gas; the heated and moisturized air enters the boiler as combustion-supporting air, so as to increase the humidity ratio and temperature of the inlet air of the gas boiler and correspondingly increase the dew point temperature of the flue gas at the outlet, so that more latent heat can be recovered by the boiler backwater, which effectively reduces the waste caused by energy mismatch and can greatly improve the thermal efficiency of the boiler; and 2. the further recovery system for residual heat of flue gas according to the present invention can be widely used to recover residual heat from gas boiler flue gas, and effectively reduces the consumption of natural gas.

### BRIEF DESCRIPTION OF THE DRAWINGS

FIG. 1 is a schematic structural diagram of Embodiment One of the present invention;
FIG. 2 is a schematic structural diagram of Embodiment Two of the present invention;
FIG. 3 is a schematic structural diagram of Embodiment Three of the present invention;
FIG. 4 is a schematic structural diagram of Embodiment Four of the present invention.

### DETAILED DESCRIPTION

The present invention is described in detail below with reference to the drawings and embodiments.

### Embodiment One

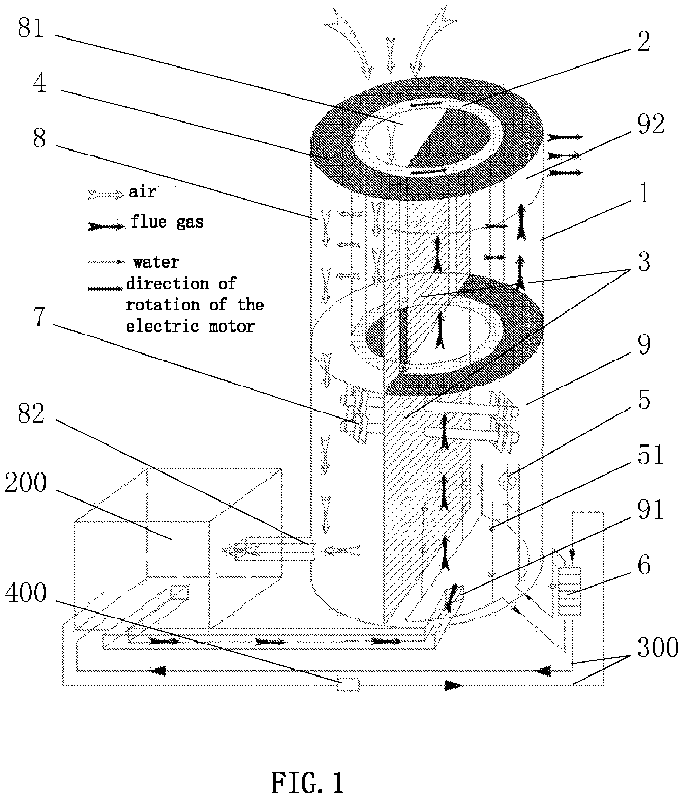

As shown in FIG. 1, the further recovery system for residual heat of flue gas as installed in this embodiment comprises a housing 1, a rotating core 2, a partition plate 3, a baffle plate 4, a spray device 5, a water-water heat exchanger 6, and air-flue gas heat exchanger 7. Therein, the housing 1 is an upright thin-wall hollow cylinder. The rotating core 2 is an upright thick-wall hollow cylinder. The side wall of the rotating core 2 is honeycomb-like, the honeycomb openings of which are horizontal, and the honeycomb surfaces are coated with desiccant material(s). The rotating core 2 is coaxially installed in the upper part of the housing 1 and capable of rotating around its central axis. The partition plate 3 passes through the central axis of the housing 1 and the rotating core 2 to divide the internal space of the housing 1 and the rotating core 2 into an air flow channel 8 and a flue gas flow channel 9. A plurality of baffle plates 4 are respectively disposed between the top of the housing 1 and the top of the rotating core 2, between the top of the rotating core 2 and the top of the partition plate 3 on the flue-gas-flow-channel side 9, between the bottom of the rotating core 2 and the partition plate 3 on the air-flow-channel side 8, and between the bottom of the rotating core 2 and the housing 1 on the flue-gas-flow-channel side 9. The top of the rotating core 2 on the air-flow-channel side 8 forms an air flow channel inlet 81, and an air flow channel outlet 82 is provided in the lower wall of the housing 1 on the air-flow-channel side 8. The air flow channel outlet 82 is connected with the air inlet of a natural gas boiler 200. A flue gas flow channel inlet 91 and a flue gas flow channel outlet 92 are respectively installed in the lower wall and upper wall of the housing 1 on the flue-gas-flow-channel side 9. The flue gas flow channel inlet 91 is connected with the flue gas outlet of the natural gas boiler 200. Since the flue gas flow channel outlet 92 is provided in the wall of the housing 1 and opened facing the surroundings, it can prevent the discharged flue gas from mixing with the air entering the air flow channel inlet 81. The spray device 5 is installed in the flue gas flow channel 9 at a lower part inside the housing 1. The liquid distributor(s) 51 of the spray device 5 is/are disposed near the side wall of the housing 1 and the partition plate 3. The water-water heat exchanger 6 is disposed outside the housing 1. The heat release unit of the water-water heat exchanger 6 is connected to the water inlet and the water outlet of the spray device 5. The heat absorption unit of the water-water heat exchanger 6 is connected to an external backwater pipe 300. An air-flue gas heat exchanger 7 is fixedly disposed on the partition plate 3 in the lower part of the housing 1. The heat release unit of the air-flue gas heat exchanger 7 is positioned in the air flow channel 8 and the heat absorption unit thereof is positioned in the flue gas flow channel 9.

When the further recovery system for residual heat of flue gas in this embodiment is in use, first, the outdoor low-temperature and low-humidity air in winter enters the air flow channel 8 inside the rotating core 2 from the air flow channel inlet 81, and then is diffused into the air flow channel 8 between the rotating core 2 and the housing 1 via the side wall of the rotating core 2. Then the air is heated and humidified as it goes through the side wall of the rotating core 2. The heated and humidified air continues to flow downward along the air flow channel 8 and further exchanges heat with the heat release unit of the air-flue gas heat exchanger 7 in the air flow channel 8 in the lower part of the housing 1, thus turning into the overheated state. Finally, the overheated air is discharged from the air flow channel outlet 82 into the natural gas boiler 200 as combustion-supporting air. Natural gas and combustion-supporting air are mixed and burned in the natural gas boiler 200, and the generated flue gas enters the flue gas flow channel 9 in the lower part of the housing 1 via the flue gas flow channel inlet 91. The liquid distributor(s) 51 of the spray device 5 spray(s) the spray water to perform heat-and-mass exchange with high-temperature flue gas. The flue gas flows upward along the flue gas flow channel 9 after cooled and dehumidified, and is further cooled as it goes through the heat absorption unit of the air-flue gas heat exchanger 7. The flue gas continues to flow upward and enters the flue gas flow channel 9 inside the rotating core 2 and then diffused into the flue gas flow channel 9 between the rotating core 2 and the housing 1 via the side wall of the rotating core 2. The flue gas is cooled and dehumidified when passing the rotating core 2 and finally discharged into the atmosphere via the flue gas flow channel outlet 92. The rotating core 2 rotates around its central axis at a certain speed. The portion of the rotating core 2 in the flue gas flow channel 9 absorbs the heat and moisture of the flue gas, and then rotates into the air flow channel 8 to transfer the absorbed heat and moisture to the air to preheat and humidify the air. After exchanging heat with the flue gas, the spray water enters the heat release unit of the water-water heat exchanger 6 and exchanges heat with the low-temperature backwater in the heat absorption unit. After preheated by the spray water, the low-temperature backwater enters the natural gas boiler 200 to be heated, and then enters a heat user 400 as high-temperature supplying water to release heat, thereby finishing a complete thermal cycle.

The further recovery system for residual heat of flue gas as installed in the present invention actually realizes two-stage recovery for residual heat of flue gas, wherein the lower spray device, the water-water heat exchanger and the air-flue gas heat exchanger constitute the first-stage flue gas recovery device, and the upper rotating core coated with desiccant material(s) constitutes the second-stage flue gas recovery device.

### Embodiment Two

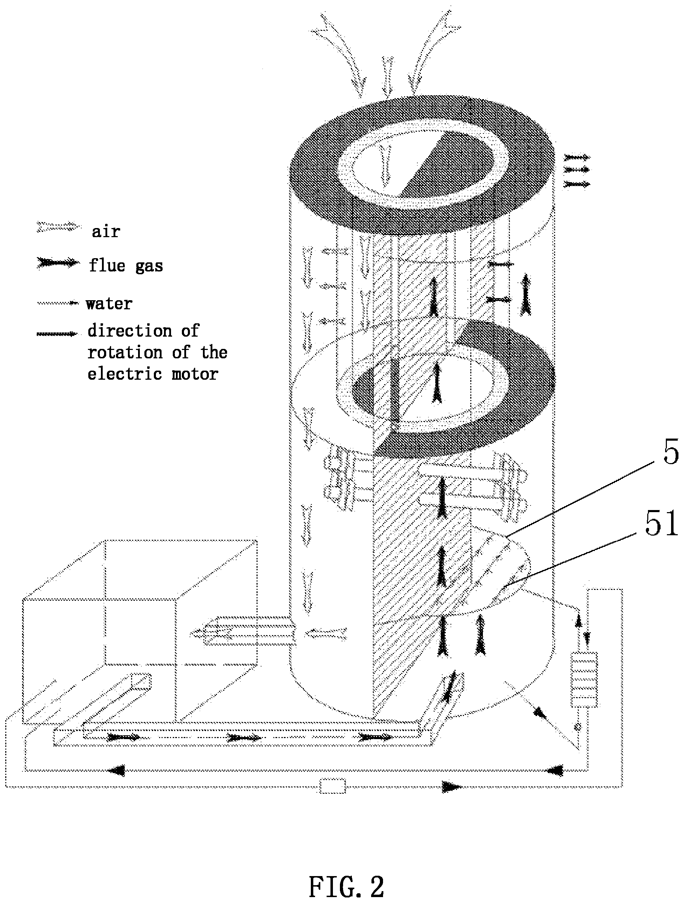

As shown in FIG. 2, the further recovery system for residual heat of flue gas as provided in this embodiment has a similar structure to that in Embodiment One, except that the liquid distributor(s) 51 of the spray device 5 is/are installed above the flue gas flow channel inlet 91 in this embodiment, so that the flue gas and the spray water exchange heat in the form of counterflows, in order to obtain a better heat exchange effect.

In the above embodiment, the air-flue gas heat exchanger 7 is disposed below the liquid distributor(s) 51 of the spray device 5. While the flue gas flows through the flow channel 9, the flue gas firstly exchanges heat with the heat absorption unit of the air-flue gas heat exchanger 7, and then enters the spray device 5 to exchange heat with the spray water.

### Embodiment Three

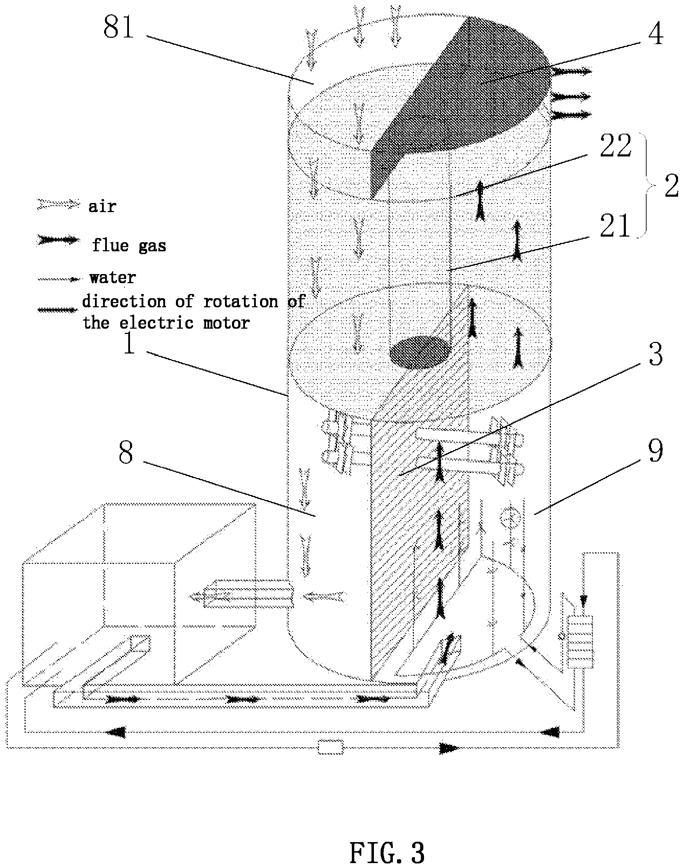

As shown in FIG. 3, the further recovery system for residual heat of flue gas as provided in this embodiment has the similar structure to that in Embodiment One, except the rotating core 2 in this embodiment including a central axis 21 and a surrounding rotating wheel 22. The rotating wheel 22 has a honeycomb structure and the honeycomb openings are vertical. The outer diameter of the rotating wheel 22 matches the inner diameter of the housing 1. Since the air can only flow vertically in the rotating wheel 22, the partition plate 3 is only installed in the housing 1 under the rotating core 2, dividing the internal space of the lower part of the housing into an air flow channel 8 and a flue gas flow channel 9, and the baffle plate 4 only needs to be disposed between the top of the rotating core 2 and the top of the housing 1 in the flue-gas-flow-channel 9. When the further recovery system for residual heat of flue gas as provided in this embodiment is in use, the air directly goes downward through the rotating wheel 22 and is directly heated and humidified, and then enters the air flow channel 8 in the lower part of the housing 1. After the flue gas goes through the spray device 5 and the air-flue gas heat exchanger 7, it flows vertically upward through the rotating wheel 22 and is discharged to the atmosphere after being cooled and dehumidified. Thus the flow channel structure is more direct and simple.

### Embodiment Four

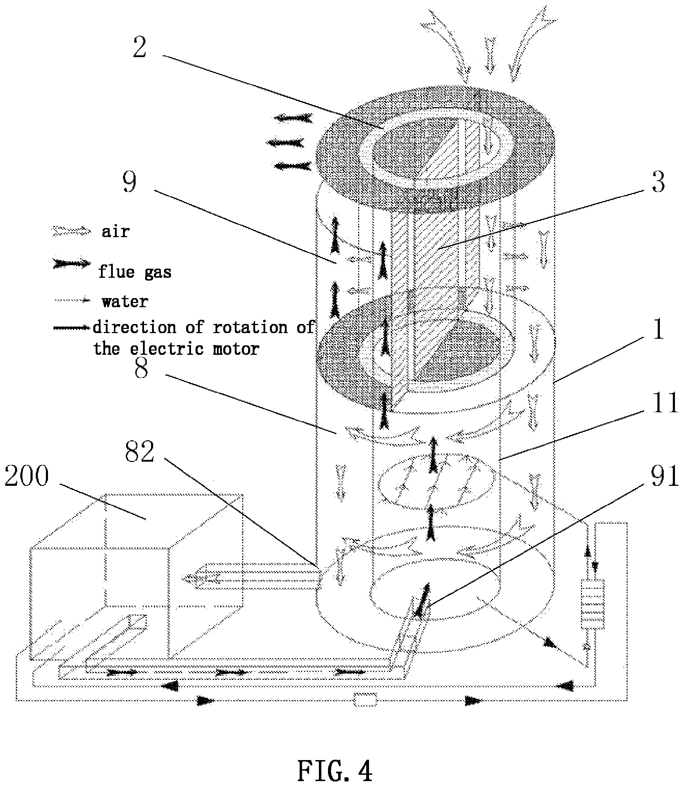

As shown in FIG.4, the further recovery system for residual heat of flue gas as provided in this embodiment has the similar structure to that in Embodiment One, except that the structure is further simplified in this embodiment. The air-flue gas heat exchanger 7 is omitted and an inner housing 11 is coaxially inserted in the housing 1 and positioned under the rotating core 2. The inner housing 11 is a thin-wall hollow cylinder. The internal cavity of the inner housing 11 is connected with the internal cavity of the rotating core 2. The partition plates 3 are only installed in the upper part of the housing 1 and in the cavity of the rotating core 2. The internal cavity of the inner housing 11 serves as the flue gas flow channel 9, and the cavity between the inner housing 11 and the housing 1 serves as the air flow channel 8. Namely, there is the flue gas flow channel 9 in the middle and the air flow channel 8 in the periphery. The flue gas flow channel inlet 91 is provided in the lower wall of the inner housing 11. When the further recovery system for residual heat of flue gas in this embodiment is in use, the air flows downwards after being heated and humidified by the rotating core 2 in the upper part and flows in the cavity between the inner housing 11 and the housing 1, and finally the air enters the natural gas boiler 200 via the air flow channel outlet 82. The flue gas directly enters the flue gas flow channel 9 in the inner housing 11 via the flue gas flow channel inlet 91. After being cooled and dehumidified by the spray water, the flue gas flows upward and is discharged after being further cooled and dehumidified by the rotating core 2. Due to the large temperature difference between the flue gas and the air in the lower part of the housing 1, the side wall surface of the inner housing 11 can even preheat the air.

The above embodiments are only used to illustrate the present invention. All of the structures, installations and connection methods of components are variable. Any equivalent transformation and improvement based on the present invention should not be excluded from the protection of the present invention.

## Claims

1. A further recovery system for residual heat of flue gas, comprising:
a housing (1) of upright thin-wall hollow cylinder shape,
a rotating core (2) coaxially installed in the upper part of the housing (1) and capable of rotating around its central axis,
a partition plate (3) installed in the housing (1) and passing through the central axis of the housing (1) and the rotating core (2),
a baffle plate (4),
a spray device (5), and
a water-water heat exchanger (6) with a heat release unit connected to a water inlet and a water outlet of the spray device (5);
wherein the rotating core (2) is a upright thick-wall hollow cylinder, the longitudinal cross section of the side wall of the rotating core (2) is honeycomb-like, the interiors of which are coated with desiccant material(s), the partition plate (3) divides the internal space of the housing (1) and the rotating (2) core into an air flow channel (8) and a flue gas flow channel (9), a plurality of baffle plates (4) are respectively installed between the top of the housing (1) and the top of the rotating core (2), between the top of the rotating (2) core and the top of the partition plate (3) on the flue-gas-flow-channel side, between the bottom of the rotating core (2) and the partition plate (3) on the air-flow-channel side, and between the bottom of the rotating core (2) and the housing (1) on the flue-gas-flow-channel side, the top of the rotating core (2) on the air-flow-channel side forms an air flow channel inlet (81), an air flow channel outlet (82) is provided in the lower wall of the housing (1) on the air-flow-channel side, a flue gas flow channel inlet (91) and a flue gas flow channel outlet (92) are respectively provided in the lower wall and upper wall of the housing (1) on the flue-gas-flow-channel side, and the spray device (5) is installed in the flue gas flow channel (9) in the lower part of the housing (1).

2. The further recovery system for residual heat of flue gas according to claim 1, wherein liquid distributor(s) (51) of the spray device (5) is/are disposed near the side wall of the housing (1) and the partition plate (3).

3. The further recovery system for residual heat of flue gas according to claim 2, wherein the liquid distributor(s) (51) of the spray device (5) is/are disposed above the flue gas flow channel inlet (91).

4. The further recovery system for residual heat of flue gas according to claim 1 or 2, wherein the partition plate (3) in the lower part of the housing (1) further has an air-flue gas heat exchanger (7) fixedly arranged thereon, and a heat release unit of the air-flue gas heat exchanger (7) is positioned in the air flow channel (8) and a heat absorption unit thereof is positioned in the flue gas flow channel (9).

5. The further recovery system for residual heat of flue gas according to claim 3, wherein the partition plate (3) in the lower part of the housing (1) further has an air-flue gas heat exchanger (7) fixedly arranged thereon, and the heat exchange end of the air-flue gas heat exchanger (7) is positioned in the air flow channel (8) and the heat absorption end thereof is positioned in the flue gas flow channel (9); the air-flue gas heat exchanger (7) is disposed below the liquid distributor(s) (51) of the spray device (5).

## Patentansprüche

1. Weiteres System zur Rückgewinnung der Restwärme von Rauchgas, umfassend:
ein Gehäuse (1) in aufrechter, dünnwandiger Hohlzylinderform,
einen rotierenden Kern (2), der koaxial im oberen Teil des Gehäuses (1) eingebaut ist und befähigt ist, um seine Mittelachse zu rotieren,
eine Trennplatte (3), die in dem Gehäuse (1) installiert ist und durch die Mittelachse des Gehäuses (1) und den rotierenden Kern (2) verläuft,
eine Prallplatte (4),
eine Sprühvorrichtung (5), und
einen Wasser-Wasser-Wärmetauscher (6) mit einer Wärmeabgabeeinheit, verbunden mit einem Wassereinlass und einem Wasserauslass der Sprühvorrichtung (5);
wobei der rotierende Kern (2) ein aufrechter dickwandiger Hohlzylinder ist, der Längsquerschnitt der Seitenwand des rotierenden Kerns (2) wabenartig ist, dessen Innenräume mit Trockenmittelmaterial(en) beschichtet sind, die Trennplatte (3) den Innenraum des Gehäuses (1) und des rotierenden Kerns (2) in einen Luftströmungskanal (8) und einen Rauchgasströmungskanal (9) unterteilt, eine Vielzahl an Prallplatten (4) zwischen der Oberseite des Gehäuses (1) und der Oberseite des rotierenden Kerns (2), zwischen der Oberseite des rotierenden Kerns (2) und der Oberseite der Trennplatte (3) auf der Seite des Rauchgasströmungskanals, zwischen der Unterseite des rotierenden Kerns (2) und der Trennplatte (3) auf der Seite des Luftströmungskanals, und zwischen der Unterseite des rotierenden Kerns (2) und dem Gehäuse (1) auf der Seite des Rauchgasströmungskanals angeordnet ist, die Oberseite des rotierenden Kerns (2) an der Seite des Luftströmungskanals einen Luftströmungskanaleinlass (81) bildet, ein Luftströmungskanalauslass (82) in der unteren Wand des Gehäuses (1) auf der Seite des Luftströmungskanals angeordnet ist, ein Rauchgasströmungskanaleinlass (91) und ein Rauchgasströmungskanalauslass (92) jeweils in der unteren Wand bzw. der oberen Wand des Gehäuses (1) auf der Seite des Rauchgasströmungskanals angeordnet sind, und die Sprühvorrichtung (5) in dem Rauchgasströmungskanal (9) in dem unteren Teil des Gehäuses (1) installiert ist.

2. Weiteres System zur Rückgewinnung der Restwärme von Rauchgas nach Anspruch 1, wobei der/die Flüssigkeitsverteiler (51) der Sprühvorrichtung (5) in der Nähe der Seitenwand des Gehäuses (1) und der Trennplatte (3) angeordnet ist bzw. sind.

3. Weiteres System zur Rückgewinnung der Restwärme von Rauchgas nach Anspruch 2, wobei der/die Flüssigkeitsverteiler (51) der Sprühvorrichtung (5) über dem Rauchgasströmungskanaleinlass (91) angeordnet ist/sind.

4. Weiteres System zur Rückgewinnung der Restwärme von Rauchgas nach Anspruch 1 oder 2, wobei die Trennplatte (3) in dem unteren Teil des Gehäuses (1) weiter einen fest darauf angeordneten Luft-Rauchgas-Wärmetauscher (7) aufweist, und eine Wärmeabgabeeinheit des Luft-Rauchgas-Wärmetauschers (7) in dem Luftströmungskanal (8) positioniert ist und eine Wärmeabsorptionseinheit davon in dem Rauchgasströmungskanal (9) positioniert ist.

5. Weiteres System zur Rückgewinnung der Restwärme von Rauchgas gemäß Anspruch 3, wobei die Trennplatte (3) in dem unteren Teil des Gehäuses (1) weiter einen fest darauf angeordneten Luft-Rauchgas-Wärmetauscher (7) aufweist und das Wärmeaustauschende des Luft-Rauchgas-Wärmetauschers (7) in dem Luftströmungskanal (8) positioniert ist und das Wärmeabsorptionsende davon in dem Rauchgasströmungskanal (9) positioniert ist; wobei der Luft-Rauchgas-Wärmetauscher (7) unterhalb des oder der Flüssigkeitsverteiler (51) der Sprühvorrichtung (5) angeordnet ist.

## Revendications

1. Système supplémentaire de récupération de chaleur résiduelle de gaz de combustion, comportant :
un boîtier (1) en forme de cylindre creux droit à paroi mince,
un noyau rotatif (2) installé coaxialement dans la partie supérieure du boîtier (1) et pouvant tourner autour de son axe central,
une plaque de séparation (3) installée dans le boîtier (1) et passant par l'axe central du boîtier (1) et du noyau rotatif (2),
une plaque déflectrice (4),
un dispositif de pulvérisation (5) et
un échangeur de chaleur eau-eau (6) avec une unité d'émission de chaleur reliée à une entrée d'eau et à une sortie d'eau du dispositif de pulvérisation (5),
dans lequel le noyau rotatif (2) est un cylindre creux droit à paroi épaisse, la section transversale longitudinale de la paroi latérale du noyau rotatif (2) est en nid d'abeilles, dont les intérieurs sont revêtus d'un (de) matériaux desséchant(s), la plaque de séparation (3) divise l'espace interne du boîtier (1) et du noyau rotatif (2) en un canal d'écoulement d'air (8) et un canal d'écoulement de gaz de combustion (9), une pluralité de plaques déflectrices (4) sont respectivement installées entre le dessus du boîtier (1) et le dessus du noyau rotatif (2), entre le dessus du noyau rotatif (2) et le dessus de la plaque de séparation (3) du côté du canal d'écoulement de gaz de combustion, entre le dessous du noyau rotatif (2) et la plaque de séparation (3) du côté du canal d'écoulement d'air, et entre le dessous du noyau rotatif (2) et le boîtier (1) du côté du canal d'écoulement de gaz de combustion, le dessus du noyau rotatif (2) du côté du canal d'écoulement d'air forme une entrée de canal d'écoulement d'air (81), une sortie de canal d'écoulement d'air (82) est agencée dans la paroi inférieure du boîtier (1) du côté du canal d'écoulement d'air, une entrée de canal d'écoulement de gaz de combustion (91) et une sortie de canal d'écoulement de gaz de combustion (92) sont respectivement agencées dans la paroi inférieure et la paroi supérieure du boîtier (1) du côté du canal d'écoulement de gaz de combustion, et le dispositif de pulvérisation (5) est installé dans le canal d'écoulement de gaz de combustion (9) dans la partie inférieure du boîtier (1).

2. Système supplémentaire de récupération de chaleur résiduelle de gaz de combustion selon la revendication 1, dans lequel un (des) distributeur(s) de liquide (51) du dispositif de pulvérisation (5) est (sont) disposé(s) près de la paroi latérale du boîtier (1) et de la plaque de séparation (3).

3. Système supplémentaire de récupération de chaleur résiduelle de gaz de combustion selon la revendication 2, dans lequel le(s) distributeur(s) de liquide (51) du dispositif de pulvérisation (5) est (sont) disposé(s) au-dessus de l'entrée de canal d'écoulement de gaz de combustion (91).

4. Système supplémentaire de récupération de chaleur résiduelle de gaz de combustion selon la revendication 1 ou 2, dans lequel la plaque de séparation (3) dans la partie inférieure du boîtier (1) a en outre un échangeur de chaleur air-gaz de combustion (7) agencé fixement sur celle-ci, et une unité d'émission de chaleur de l'échangeur de chaleur air-gaz de combustion (7) est positionnée dans le canal d'écoulement d'air (8) et une unité d'absorption de chaleur de celle-ci est positionnée dans le canal d'écoulement de gaz de combustion (9).

5. Système supplémentaire de récupération de chaleur résiduelle de gaz de combustion selon la revendication 3, dans lequel la plaque de séparation (3) dans la partie inférieure du boîtier (1) a en outre un échangeur de chaleur air-gaz de combustion (7) agencé fixement sur celle-ci, et l'extrémité d'échange de chaleur de l'échangeur de chaleur air-gaz de combustion (7) est positionnée dans le canal d'écoulement d'air (8) et l'extrémité d'absorption de chaleur de celle-ci est positionnée dans le canal d'écoulement de gaz de combustion (9), l'échangeur de chaleur air-gaz de combustion (7) est disposé sous le(s) distributeur(s) de liquide (51) du dispositif de pulvérisation (5).
